(19) **Europäisches Patentamt**
**European Patent Office**
**Office européen des brevets**

(11) Numéro de publication : **0 093 662**
**B1**

(12) **FASCICULE DE BREVET EUROPÉEN**

(45) Date de publication du fascicule du brevet :
30.12.86

(51) Int. Cl.⁴ : **F 24 J 2/40**

(21) Numéro de dépôt : **83400847.6**

(22) Date de dépôt : **28.04.83**

(54) **Dispositif d'orientation pour capteur solaire.**

(30) Priorité : **29.04.82 FR 8207387**

(43) Date de publication de la demande :
**09.11.83 Bulletin 83/45**

(45) Mention de la délivrance du brevet :
**30.12.86 Bulletin 86/52**

(84) Etats contractants désignés :
**AT BE CH DE FR GB IT LI LU NL SE**

(56) Documents cités :
**DE-A- 2 715 334**
**FR-A- 2 427 455**
**FR-A- 2 449 919**
**FR-A- 2 484 096**
**GB-A- 1 091 069**

(73) Titulaire : **CREUSOT-LOIRE**
**42 rue d'Anjou**
**F-75008 Paris (FR)**

(72) Inventeur : **Pido, Jean-Claude**
**Parc du Tennis Bâtiment P No 31**
**F-71200 Le Creusot (FR)**
Inventeur : **Sevelinge, Gérard**
**9 rue de St. Gengoux**
**F-71300 Montceau Les Mines (FR)**

(74) Mandataire : **Polus, Camille et al**
**c/o Cabinet Lavoix 2, Place d'Estienne d'Orves**
**F-75441 Paris Cedex 09 (FR)**

**Description**

La présente invention concerne un dispositif destiné à orienter un capteur solaire en fonction du mouvement apparent du soleil.

L'énergie solaire peut être récupérée sous forme de chaleur en utilisant un miroir concave destiné à concentrer les rayons captés vers un foyer où peut être placée, par exemple, une chaudière. Comme le miroir concave doit suivre les mouvements apparents du soleil, il est nécessaire de prévoir un dispositif d'orientation du miroir en azimut et un dispositif d'orientation du miroir en site. Ces dispositifs d'orientation doivent assurer un mouvement et un positionnement précis du miroir en toute circonstance, et notamment malgré les actions variées du vent sur l'ensemble de la structure. Ces dispositifs doivent être aussi irréversibles, c'est-à-dire qu'une action directe sur le miroir ne doit pas dérégler sa position. Enfin, les dispositifs doivent être simples, faciles à installer sur le site, et doivent conserver toutes leurs qualités bien qu'étant exposés aux intempéries.

Les dispositifs d'orientation connus actuellement sont relativement complexes, et comportent des mécanismes délicats qui nécessitent un entretien périodique.

En effet, on connaît dans le FR-A-2 449 919 un capteur solaire comprenant un miroir concave fixé sur un support mobile en rotation autour d'un axe de rotation et un dispositif d'orientation constitué d'une pièce formant vis montée dans l'axe de rotation et d'une pièce formant écrou mobile uniquement en translation coopérant avec ladite vis qui est solidaire du support mobile en rotation du miroir et actionnée par un vérin à double action.

L'invention concerne donc un capteur solaire comprenant un miroir concave monté sur un support mobile en rotation autour d'un axe de rotation, et comprenant un dispositif d'orientation contrôlant la position angulaire du miroir autour de cet axe de rotation.

Selon l'invention, le dispositif d'orientation est constitué d'une pièce formant vis, solidaire du support, formée d'un tube dont la face extérieure cylindrique comporte les filets de la vis et dont la face interne cylindrique constitue le cylindre de travail du vérin à double action comportant un piston coulissant directement à l'intérieur de l'alésage du tube formant ladite vis, et relié par des pièces rigides à l'écrou, le support du miroir étant constitué d'un premier tube vertical monté concentriquement tournant autour d'un second tube vertical lui-même relié rigidement à une structure fixée au sol, ledit premier tube étant relié, par sa partie supérieure, à une plaque radiale fixée à l'extrémité supérieure de la vis qui est disposée concentriquement à l'intérieur dudit second tube, et l'écrou monté sur la vis à l'intérieur du second tube comporte à sa périphérie des encoches coopérant avec des éléments de guidage longitudinaux disposés sur la face interne du second tube.

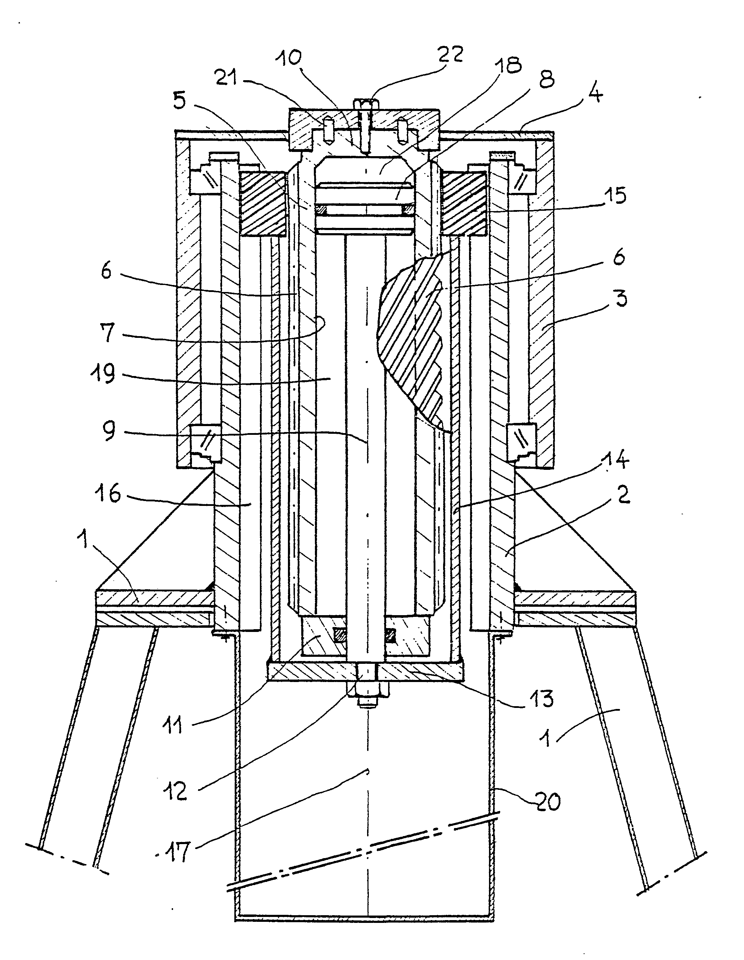

D'autres caractéristiques et avantages apparaîtront lors de la description détaillée de l'exemple de réalisation qui va suivre, illustré par le dessin annexé.

La figure unique représente, en coupe longitudinale, un dispositif d'orientation conforme à l'invention.

Nous allons maintenant décrire l'exemple de réalisation en se reportant à la figure annexée. On distingue sur cette figure une structure rigide 1 fixée au sol, sur laquelle est fixé un tube rigide vertical 2 s'étendant essentiellement au-dessus de la structure 1, sur lequel vient s'emboîter concentriquement, par l'extérieur, un autre tube 3 relié au tube 2 par l'intermédiaire de roulements, de sorte que le tube 3 peut tourner librement par rapport au tube 2. Le tube 3 est en outre relié, par sa partie supérieure, à une plaque radiale 4 elle-même reliée de façon démontable à la partie supérieure 10 d'une pièce formant vis 5. De ce fait, la vis 5 est disposée concentriquement à l'intérieur du tube rigide 2. La vis 5 présente la forme d'un tube dont la face extérieure cylindrique comporte des filets 6 et dont la face interne cylindrique constitue le cylindre de travail 7 d'un vérin à double action. Ce vérin comprend donc un piston 8 pouvant coulisser à l'intérieur de l'alésage de la vis 5, sous l'action d'un fluide de commande pouvant être amené dans le cylindre de travail 7. Le piston 8 est relié à une tige 9 qui débouche dans la partie inférieure du cylindre de travail 7. Bien sûr, le cylindre de travail 7 est obturé vers le haut par une paroi radiale étanche et vers le bas par une autre paroi radiale 11 étanche traversée de façon étanche par la tige 9. L'extrémité externe 12 de la tige du vérin est reliée à une plaque radiale 13, et à la périphérie de cette plaque 13 sont fixées des pièces rigides 14 qui s'étendent longitudinalement dans l'espace compris entre le tube rigide 2 et la pièce formant vis 5. Ces pièces rigides 14 sont fixées par leur partie supérieure à un écrou 15 qui est vissé sur la vis 5 et qui est assujetti à coulisser uniquement longitudinalement à l'intérieur du tube 2 grâce à des pièces de guidage 16 s'étendant longitudinalement sur la face interne du tube 2 et venant s'engager dans des encoches correspondantes ménagées sur la partie périphérique de l'écrou 15.

Le dispositif d'orientation qui vient d'être décrit fonctionne de la manière suivante. Le miroir du capteur solaire est monté, par l'intermédiaire d'un support approprié (non représenté), sur la plaque 4. De la sorte, on voit que le miroir est monté pivotant autour de l'axe vertical 17, puisqu'il est monté rigidement par rapport au tube vertical 3 qui peut tourner par l'intermédiaire des roulements par rapport à l'ensemble de la structure fixe 1, 2. On voit par conséquent que le dispositif d'orientation qui vient d'être décrit correspond à une commande de réglage du miroir en azimut. La commande de rotation du miroir s'effectue donc par la commande de rotation de la plaque support 4. Pour réaliser cette rotation, il suffit d'envoyer dans l'une des deux chambres 18 ou 19 du vérin, un fluide de travail, de préférence liquide qui contrôle le déplacement du piston 8. Comme ce piston 8 est relié, par l'intermédiaire des pièces 9, 13, 14, à la pièce formant écrou 15, les déplacements linéaires du piston 8 entraînent donc des déplacements linéaires équivalents de l'écrou 15. Par conséquent, tous déplacements en translation de l'écrou 15 se traduisent par des déplacements en rotation de la vis 5 sur laquelle l'écrou est vissé. L'envoi de fluide dans les deux chambres du vérin entraîne donc la rotation de la pièce formant vis 5 et par conséquent du miroir. Bien sûr, les filets 6 de la vis 5 doivent être suffisamment inclinés pour que la transmission vis-écrou s'effectue avec un bon rendement. On peut même s'arranger pour choisir une inclinaison des filets de telle sorte que le mouvement soit irréversible, c'est-à-dire que les déplacements linéaires de l'écrou puissent entraîner la rotation de la vis mais que l'inverse soit impossible. On peut remarquer aussi que avec une telle conception, la totalité des filets de l'écrou 15 sont en contact permanent avec les filets 6 de la vis 5. Cette disposition confère à l'ensemble un couple admissible en rotation très grand. De ce fait, il est possible, comme préconisé dans l'invention, d'utiliser pour l'écrou 15 un matériau synthétique, tel, par exemple, qu'un nylon, une résine époxy, ou tout autre matière plastique de haute résistance. L'association d'une vis métallique et d'un écrou en matière synthétique donne au système vis-écrou des qualités mécaniques de frottement et d'usure excellents, évite tout problème de graissage, et permet de réaliser une transmission pratiquement sans jeu et sans rodage. L'écrou, réalisé en matière synthétique, peut être usiné ou, de préférence, moulé.

On peut compléter ce dispositif d'orientation par un carter étanche protecteur 20 fixé par dessous à la partie inférieure du tube 2, ou à son voisinage. Ce carter permet ainsi d'enfermer complètement le système vis-écrou, ce qui permet de réaliser un dispositif qui résiste bien à toutes les intempéries. L'alimentation en fluide hydraulique du vérin peut s'effectuer par des canalisations souples reliant un dispositif de pompes appropriées avec les chambres 18 et 19. Les canalisations (non représentées) peuvent être, par exemple, fixées sur le dispositif d'orientation au niveau de la plaque support 4, de la pièce formant vis 5, ou au niveau de l'extrémité 12 de la tige de piston 9.

Le dispositif d'orientation qui vient d'être décrit permet en outre un démontage facile de l'ensemble du système vis-écrou et du vérin de commande. En effet, pour rendre démontable cet ensemble, il suffit de prévoir une liaison entre la plaque radiale 4 et la pièce formant vis 5 réalisée par un emboîtement claveté ou à ergots 21 et vissé 22 depuis le dessus du dispositif. Le démontage s'effectue alors par extraction du dispositif vers le bas, sans aucun démontage du miroir ou de son support tournant 1, 2, 3, 4.

On peut concevoir un dispositif d'orientation en site conçu de manière tout à fait identique à celui décrit précédemment ; il suffit en effet de disposer un tel dispositif autour d'un axe de rotation 17 horizontal au lieu de vertical.

**Revendications**

1. Capteur solaire comprenant un miroir concave fixé sur un support mobile en rotation autour d'un axe de rotation (17) et un dispositif d'orientation constitué d'une pièce formant vis (5) montée dans l'axe de rotation (17) et d'une pièce formant écrou (15) mobile uniquement en translation coopérant avec ladite vis (5) et actionnée par un vérin à double action, commandé hydrauliquement, caractérisé par le fait que la pièce formant vis (5), solidaire du support du miroir, est formée d'un tube dont la face extérieure cylindrique comporte les filets (6) de la vis (5) et dont la face interne cylindrique constitue le cylindre de travail (7) du vérin à double action comportant un piston (8) coulissant directement à l'intérieur de l'alésage du tube formant ladite vis (5), et relié par des pièces rigides (9, 12, 13, 14) à l'écrou (15), que le support du miroir est constitué d'un premier tube vertical (3) monté concentriquement tournant autour d'un second tube vertical (2) lui-même relié rigidement à une structure (1) fixée au sol, ledit premier tube (3) étant relié, par sa partie supérieure, à une plaque radiale (4) fixée à l'extrémité supérieure de la vis (5) qui est disposée concentriquement à l'intérieur dudit second tube (2), et que l'écrou (15) monté sur la vis (5) à l'intérieur du second tube (2) comporte à sa périphérie des encoches coopérant avec des éléments de guidage longitudinaux (16) disposés sur la face interne du second tube (2).

2. Capteur solaire selon la revendication 1, caractérisé par le fait que l'écrou (15) est réalisé dans une matière synthétique moulée.

3. Capteur solaire selon la revendication 1, caractérisé par le fait que la vis (5) est obturée, à sa partie supérieure (10), par une paroi radiale et à sa partie inférieure par une paroi radiale (11) traversée de façon étanche par une tige (9) reliée au piston (8), et dont l'extrémité inférieure (12) est reliée rigidement à l'écrou (15).

4. Capteur solaire selon l'une des revendications précédentes, caractérisé par le fait qu'il comporte en outre un carter étanche protecteur (20) fixé par dessous à la partie inférieure du second tube (2) ou à son voisinage.

5. Capteur solaire selon l'une des revendications précédentes, caractérisé par le fait que la liaison entre la plaque radiale (4) et la pièce formant vis (5) est obtenue par emboîtement (21) et vissage (22) depuis le dessus, afin de permettre le démontage facile du dispositif par extraction vers le bas sans démontage du miroir ou de son support.

**Claims**

1. A solar capturing device comprising a concave mirror fixed on a support which is rotatable about an axis of rotation (17) and an orienting device constituted by a member forming a screw (5) mounted on the axis of rotation and a member forming a nut (15) solely movable in translation, cooperating with said screw (5) and actuated by a double-acting jack controlled hydraulically, characterized in that the member forming a screw (5) connected to the support of the mirror comprises a tube whose outer cylindrical surface comprises screwthreads (6) of the screw (5) and whose inner cylindrical surface constitutes the work cylinder (7) of the double-acting jack comprising a piston (8) sliding directly inside the bore of the tube forming said screw (5) and connected by rigid elements (9, 12, 13, 14) to the nut (15), the support of the mirror is constituted by a first vertical tube (3) mounted to be concentrically rotatable about a second vertical tube (2) which is rigidly connected to a structure (1) fixed to the ground, said first tube (3) being connected, by its upper part, to a radial plate (4) fixed to the upper end of the screw (5) which is disposed concentrically within said second tube (2), and the nut (15) mounted on the screw (5) within the second tube (2) includes on its periphery notches cooperating with longitudinal guiding elements (16) disposed on the inner surface of the second tube (2).

2. A solar capturing device according to claim 1, characterized in that the nut (15) is made from a moulded synthetic material.

3. A solar capturing device according to claim 1, characterized in that the screw (5) is closed in its upper part (10) by a radial wall and in its lower part by a radial wall (11) through which extends in a sealed manner a rod (9) connected to the piston (8), the lower end (12) of which rod is rigidly connected to the nut (15).

4. A solar capturing device according to one of the preceding claims, characterized in that it further comprises a protective sealed case (20) fixed under the lower part of the second tube (2) or in the vicinity thereof.

5. A solar capturing device according to one of the preceding claims, characterized in that the radial plate (4) and the member forming a screw (5) are interconnected by a fitting together (21) and screwing (22) from above so as to permit the easy disassembly of the device by a downward extraction without dismantling the mirror or its support.

**Patentansprüche**

1. Sonnenlichtkollektor mit einem konkaven Spiegel, der auf einem um eine Drehachse (17) drehbeweglich gelagerten Träger befestigt ist, und mit einem Ausrichtgerät aus einem eine Schraube (5) bildenden Teil, das in der Drehachse angeordnet ist, und einem mit dieser Schraube (5) zusammenwirkenden und eine nur in Längsrichtung bewegliche Mutter (15) bildenden Teil, das durch einen hydraulisch gesteuerten Doppelaktionskolben betätigt wird, dadurch gekennzeichnet, daß daß das mit dem Träger des Spiegels festverbundene, eine Schraube (5) bildende Teil aus einem Rohr gebildet ist, dessen zylindrische Außenwand die Einschnitte (6) der Schraube (5) aufweist und dessen zylindrische Innenwand den Arbeitszylinder (7) des Doppelaktionskolbens bildet, der direkt innerhalb der Bohrung des dieses Schraube (5) bildenden Rohres gleitet und über starre Verbindungsteile (9, 12, 13, 14) mit der Mutter (15) verbunden ist, daß der Träger des Spiegels aus einem senkrechten ersten Rohr (3) besteht, das um ein senkrechtes zweites Rohr (2) drehbeweglich montiert ist, das seinerseits starr mit einem am Boden befestigten Gestell (1) verbunden ist, daß das erste Rohr (3) an seinem oberen Teil mit einer Querscheibe (4) verbunden ist, die am oberen Ende der Schraube (5) befestigt ist, die im Inneren dieses zweiten Rohres (2) konzentrisch angeordnet ist, und daß die im Inneren des zweiten Rohres (2) auf die Schraube (5) aufgesetzte Mutter (15) an ihrem Umfang Einkerbungen aufweist, die mit auf der Innenwand des zweiten Rohres (2) angeordneten Längsführungselementen (16) zusammenwirken.

2. Sonnenlichtkollektor nach Anspruch 1, dadurch gekennzeichnet, daß die Schraube (5) aus einem synthetischen Formgießmaterial besteht.

3. Sonnenlichtkollektor nach Anspruch 1, dadurch gekennzeichnet, daß die Schraube (5) an ihrem oberen Teil (10) durch ein Querabschlußteil und an ihrem unteren Teil durch ein von einer mit dem Kolben (8) verbundenen Kolbenstange (9) dicht durchdrungenes Querabschlußteil (11) verschlossen ist und das untere Ende (12) der Kolbenstange (9) starr mit der Mutter (15) verbunden ist.

4. Sonnenlichtkollektor nach einem der vorhergehenden Ansprüche, dadurch gekennzeichnet, daß er ferner ein flüssigkeitsdichtes Schutzgehäuse (20) aufweist, das unter dem unteren Teil des zweiten Rohres (2) oder in dessen Nachbarschaft befestigt ist.

5. Sonnenlichtkollektor nach einem der vorhergehende Ansprüche, dadurch gekennzeichnet, daß die Verbindung zwischen der Querscheibe (4) und der Schraube (5) durch Einpaßteile (21) und Verschraubungsteile (22) von oben her gebildet ist, um ohne Demontage des Spiegels oder seines Trägers eine leichte Demontage der Anordnung durch Herausziehen nach unten hin zu ermöglichen.